Europäisches Patentamt

European Patent Office

Office européen des brevets

(11) Veröffentlichungsnummer: **0 115 572**
**B1**

# (12) EUROPÄISCHE PATENTSCHRIFT

(45) Veröffentlichungstag der Patentschrift: **13.06.90**

(21) Anmeldenummer: **83110402.1**

(22) Anmeldetag: **19.10.83**

(51) Int. Cl.⁵: **G 01 D 5/244,** H 03 M 1/00, G 01 B 7/02

(54) Inkrementale Messeinrichtung.

(30) Priorität: **08.12.82 DE 3245357**

(43) Veröffentlichungstag der Anmeldung:
**15.08.84 Patentblatt 84/33**

(45) Bekanntmachung des Hinweises auf die Patenterteilung:
**13.06.90 Patentblatt 90/24**

(84) Benannte Vertragsstaaten:
**AT CH DE FR GB IT LI NL SE**

(56) Entgegenhaltungen:
**DE-A-3 037 810**
**FR-A-2 323 983**
**GB-A-2 065 872**

(73) Patentinhaber: **Dr. Johannes Heidenhain GmbH**
**Dr.-Johannes-Heidenhain-Strasse 5 Postfach 1260**
**D-8225 Traunreut (DE)**

(72) Erfinder: **Nelle, Günther, Dr.-Ing.**
**Eichenweg 12**
**D-8221 Bergen (DE)**

Courier Press, Leamington Spa, England.

## Beschreibung

Die Erfindung betrifft eine inkrementale Meßeinrichtung gemäß dem ersten Teil des Anspruchs 1.

Bei einer derartigen Meßeinrichtung können die an den Referenzmarken erzeugten Seuerimpulse auf verschiedene Weise verwertet werden, z.B. zum Reproduzieren der Nullposition im Zähler, zum Anfahren einer bestimmten Position zu Beginn der Messung und zur Kontrolle von Störimpulsen sowie zur Beaufschlagung einer nachgeschalteten Steuereinrichtung.

Aus der DE—AS 25 40 412 ist eine inkrementale Meßeinrichtung bekannt, bei der auf einem Maßstab bereits bei der Teilungsherstellung in zueinander festgelegten Abständen eine Reihe von Referenzmarken vorgesehen und mindestens ein Auswahlelement auf dem Maßstab selbst oder in dessen unmittelbarer Nähe in einer Nut verschiebbar angeordnet sind. Mittels der Auswahlelemente können eine oder mehrere Referenzmarken ausgewählt und jeweils in Wirkzusammenhang mit einem Schaltmittel gebracht werden, indem jeder Referenzmarke, die beim Meßvorgang zur Wirkung gelangen soll, ein Magnet zugeordnet ist, der beim Vorbeibewegen einer Abtasteinheit einen darauf angebrachten elektrischen Schalter ansteuert, dessen elektrischer Ausgang zusammen mit dem elektrischen Ausgang der Abtasteinheit an eine elektronische Baueinheit gelegt ist, die an ihrem Ausgang nur dann einen Steuerimpuls abgibt, wenn gleichzeitig am Ausgang der Abtasteinheit und am Ausgang des Schalters ein elektrisches Signal anliegt.

Eine derartige inkrementale Meßeinrichtung wird beispielsweise bei Bearbeitungsmaschinen zur Messung der Relativlage von Maschinenteilen eingesetzt. Durch die bei solchen Maschinen auftretenden Erschütterungen kann es aber zu Verschiebungen des Auswahlelements in der Nut kommen, so daß die eindeutige Zuordnung des Auswahlelements zur ausgewählten Referenzmarke und ein Wirksamwerden der Referenzmarke nicht mehr gewährleistet sind. Bei dicht benachbarten Referenzmarken kann bei derartigen Verschiebungen des Auswahlelements auch eine falsche Referenzmarke zur Wirkung gelangen, so daß ein falscher Steuervorgang, beispielsweise ein Nullungsvorgang, im Zähler ausgelöst wird, der ein falsches Meßergebnis zur Folge hat. Das Auswahlelement in Form eines Magneten zieht zudem in starkem Maße Metallspäne an, deren Entfernung nur schwierig zu bewerkstelligen ist.

Der Erfindung liegt die Aufgabe zugrunde, bei einer Meßeinrichtung der oben genannten Gattung eine einfache Fixierung der Lage des Auswahlelements zur jeweiligen Referenzmarke anzugeben sowie eine einwandfreie Funtionsfähigkeit zu gewährleisten.

Diese Aufgabe wird erfindungsgemäß durch die Merkmale des Anspruchs 1 gelöst.

Die mit der Erfindung erzielten Vorteile bestehen insbesondere darin, daß die vorgeschlagene Fixierung der Lage eines Auswahlelements zu einer Referenzmarke mittels eines einfach und billig zu fertigenden Elements erfolgt, das ein unbeabsichtigtes Verschieben des Auswahlelements ausschließt. Dieses Element in Form eines Gehäuses für das Auswahlelement mit einem Klemmelement kann insbesondere in einem Stück aus Kunststoff bestehen, Außerdem lassen sich Metallspäne und sonstige Verunreinigungen von Auswahlelement leicht entfernen.

Vorteilhafte Weiterbildungen der Erfindung entnimmt man den abhängigen Ansprüchen.

Ausführungsbeispiele der Erfindung werden anhand der Zeichnung näher erläutert.

Es zeigen

Figur 1 schematisch eine bekannte inkrementale Meßeinrichtung;

Figur 2 eine Draufsicht auf den Maßstab der Meßeinrichtung nach Figur 1;

Figur 3 ein Gehäuse mit einem Klemmelement nach der Erfindung;

Figur 4 eine Draufsicht auf einen Ausschnitt eines Maßstabs mit Merkmalen der Erfindung;

Figur 5 eine gekapselte Meßrichtung und

Figur 6 ein weiteres Gehäuse mit einem Klemmelement in einer Draufsicht und in einem Längsschnitt.

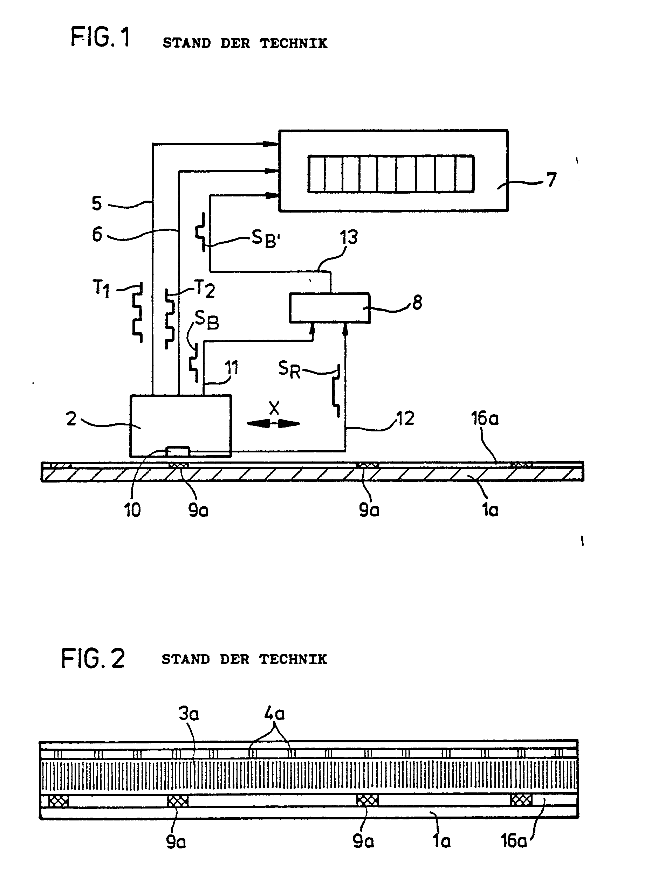

In Figur 1 ist schematisch eine bekannte lichtelektrische inkrementale Längenmeßeinrichtung gezeigt, die aus einem Maßstab 1a und aus einer Abtasteinheit 2 besteht, die jeweils in nicht dargestellter Weise mit zu messenden Objekten einer Bearbeitungsmaschine verbunden sind. Auf dem Maßstab 1a ist eine Teilung 3a in Form eines Strichgitters (Figur 2) aufgebracht, das im Auflicht photoelektrisch berührungsfrei von der Abtasteinheit 2 abgetastet wird. Entlang der Teilung 3a ist auf dem Maßstab 1a eine Reihe von äquidistanten Referenzmarken 4a vorgesehen, die jeweils aus Strichgruppen mit einer bestimmten Strichverteilung bestehen. Die durch die Abtastung der Teilung 3a erzeugten periodischen Abtastsignale, die in der Abtasteinheit 2 verstärkt und in Rechtecksignale $T_1$, $T_2$ umgeformt werden, steuern über elektrische Leitungen 5, 6 einen elektronischen Zähler 7, der die Meßwerte in digitaler Form anzeigt. Die um ein Viertel der Gitterkonstanten der Teilung 3a zueinander phasenverschobenen Rechtecksignale $T_1$, $T_2$ dienen der Diskriminierung der Abtastrichtung. Das an den Referenzmarken 4a erzeugte Signal wird in der Abtasteinheit 2 verstärkt, in ein Rechtecksignal $S_B$ umgeformt und über eine Leitung 11 einer elektronischen Baueinheit 8 zugeführt.

Die Auswahl derjenigen Referenzmarke 4a, die beim Meßvorgang zur Wirkung gelangen soll, erfolgt durch Zuordnung eines Auswahlelements 9a in Form eines Magneten in einer Führungsnut 16a im Maßstab 1a, dessen Magnetfeld bei Annäherung der Abtasteinheit 2 ein darauf befindliches Schaltmittel 10 in Form eines Reedschalters ansteuert, dessen Ausgangssignal $S_R$ auf einer Leitung 12 gleichfalls der elektronischen Baueinheit 8 zugeleitet wird. Nur, wenn die Signale $S_B$, $S_R$ auf den Leitungen 11, 12 gleichzeitig an den Eingängen der elektronischen Baueinheit 8 anliegen, wird auf deren Ausgangsleitung 13 ein Signal $S_B'$ dem elektronischen Zähler 7 zugeführt, der dadurch zum Beispiel auf den Zahlenwert "Null" gesetzt wird.

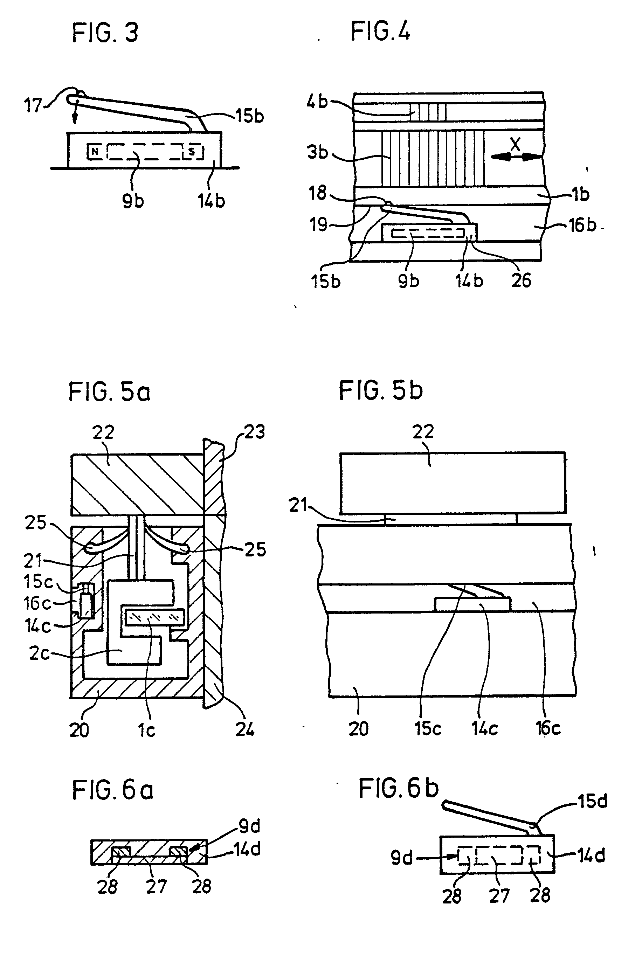

Erfindungsgemäß ist das Auswahlelement 9b in Form eines Magneten nach Figur 3 in einem unmagnetischen Gehäuse 14b untergebracht, das ein Klemmelement 15b in Form eines seitlichen Federarms aufweist. Das Gehäuse 14b mit dem Magneten 9b ist gemäß Figur 4 zwecks Zuordnung des Magneten 9b zu einer ausgewählten Referenzmarke 4b in einer Führungsnut 16b eines Maßstabs 1b mit einer Teilung 3b in Bewegungsrichtung der Abtasteinheit 2 (Meßrichtung X) verschiebbar. Die Fixierung der Lage des Magneten 9b bezüglich der betreffenden Referenzmarke 4b wird durch das Klemmelement 15b bewirkt, dessen Klemmkraft so bemessen ist, daß sie ein unbeabsichtigtes Verschieben des Magneten 9b, beispielsweise durch Erschütterungen der Maschine, ausschließt. Das Klemmelement 15b weist an seinem freien Ende einen Vorsprung 17 auf, der in Ausnehmungen 18 in der Seitenfläche 19 der Führungsnut 16b eingreift, um die eindeutige Lagezuordnung des Auswahlelements 9b zur ausgewählten Referenzmarke 4b bei der Verschiebung des Gehäuses 14b in der Führungsnut 16b zu erleichtern.

In Figur 5a, b ist in einem Querschnitt und in einer ausschnittsweisen Längsansicht eine gekapselte Längenmeßeinrichtung dargestellt. Ein Träger 20 für einen Maßstab 1c ist als von Dichtlippen 25 verschlossenes Hohlprofil ausgebildet, in dessen Inneren der Maßstab 1c befestigt ist und von einer Abtasteinheit 2c abgetastet wird, die über einen Mitnehmer 21 und ein Montageelement 22 am Schlitten 23 einer nicht gezeigten Maschine befestigt ist; das Hohlprofil 20 ist mit dem Bett 24 der Maschine verbunden. In einer T-förmigen Führungsnut 16c in der der Maschine abgewandten Außenseite des Hohlprofils 20 ist ein nicht gezeigtes Auswahlelement im Inneren eines Gehäuses 14c mit einem Klemmelement 15c einer nicht dargestellten Referenzmarke auf dem Maßstab 1c zugeordnet. Die Führungsnut kann auch außerhalb des Hohlprofils 20 der Meßeinrichtung am Bett 24 der Maschine vorgesehen sein.

Gemäß Figur 4 ist der Magnet 9b im Gehäuse 14b vorzugsweise derart dimensioniert, daß die Austrittsfläche der magnetischen Feldlinien aus der Außenfläche 26 des Gehäuses 14, die dem Schaltmittel 10 in der Abtasteinheit 2 (Figur 2) zugewandt ist, innerhalb dieser Außenfläche 26 liegt. Dadurch lassen sich feine Metallspäne, die sich auf dieser Außenfläche 26 ansammeln, leichter durch Abstreifen entfernen, da in den Randbereichen dieser Außenfläche 26 die magnetische Feldstärke zum Festhalten der Metallspäne nicht mehr ausreichend ist.

In Figur 6a, b ist in einem Längsschnitt und in einer Draufsicht ein Gehäuse 14d mit einem Klemmelement 15d dargestellt, in dessen Inneren ein Auswahlelement 9d angeordnet ist, das aus zwei gegenpolig auf einer magnetische Platte 27 angeordneten Magneten 28 besteht, wodurch sich ein definierter Verlauf der magnetischen Feldlinien zum exakten Ansteuern des Schaltmittels 10 ergibt.

In nicht gezeigter Weise kann im Gehäuse mit dem Klemmelement auch anstelle des Magneten das Schaltmittel in Form des Reedschalters angeordnet sein, während der Magnet in der Abtasteinheit vorgesehen ist. Bevorzugt besteht das Gehäuse 14 mit dem Klemmelement 15 in einem Stück aus Kunststoff, in den das Auswahlelement 9 eingegossen ist.

Anstelle eines Reedschalters als Schaltmittel 10 kann auch eine Feldplatte Verwendung finden. Es können auch mehrere Auswahlelemente 9 jeweils einer Referenzmarke 4 zugeordnet sein; ebenfalls können auch induktive und kapazitive Auswahlelemente verwendet werden.

In nicht dargestellter Weise kann das Gehäuse mit dem Klemmelement auch aus durchsichtigem Material zur Aufnahme eines optischen Auswahlelements, insbesondere eines Spiegels, eines Prismas oder einer Lichtquelle, ausgebildet sein. Im Falle eines Spiegels oder eines Prismas als Auswahlelement sind auf der Abtasteinheit eine Lichtquelle und ein Photoempfänger angeordnet; beim Passieren des Spiegels oder des Prismas fällt das Licht von der Lichtquelle über diese Auswahlelemente auf den Photoempfänger als Schaltmittel. Wenn das Auswahlelement aus einer Lichtquelle besteht, fällt das Licht direkt auf den Photoempfänger als Schaltmittel.

Die Erfindung ist nicht auf eine lichtelektrische Meßeinrichtung beschränkt, sondern auch bei magnetischen, induktiven und kapazitiven Meßeinrichtungen mit Erfolg einsetzbar.

Die Erfindung ist sinngemäß auch bei absoluten Meßeinrichtungen (Codegebern) anwendbar, die Inkrementalspuren aufweisen.

**Patentansprüche**

1. Inkrementale Meßeinrichtung mit entlang der Teilung (3a, 3b) eines Maßstabs (1a, 1b, 1c) vorgesehenen Referenzmarken (4a, 4b), die der Teilung (3a, 3b) absolut zugeordnet sind und an denen im Zusammenwirken mit einer Abtasteinheit (2, 2c) reproduzierbare elektrische Impulse ($S_B$) erzeugt werden, mit mindestens einem Auswahlelement (9a, 9b, 9d), das auf dem Maßstab (1a, 1b, 1c) selbst oder in dessen unmittelbarer Nähe in Bewegungsrichtung der Abtasteinheit (2, 2c) verschiebbar in einer Führung (16a, 16b, 16c) angeordnet ist und das jeweils einer ausgewählten Referenzmarke (4a, 4b) zugeordnet werden kann, und mit einem elektrischen Schaltmittel (10), das durch das Auswahlelement (9a, 9b, 9d) ansteuerbar ist, wobei ein an einer Referenzmarke (4a, 4b) erzeugter elektrischer Impuls ($S_B$) nur dann an einen elektronischen Zähler (7) der Meßeinrichtung und/oder eine Steuereinrichtung weitergeleitet wird, wenn gleichzeitig das elektrische Schaltmittel (10) von einem Auswahlelement (9a, 9b, 9d) angesteuert wird, dadurch gekennzeichnet, daß das Auswahlelement (9b, 9d) in einem Gehäuse (14b, 14c, 14d) untergebracht ist, das wenigstens ein Klemmelement (15b, 15c, 15d) in Form eines seitlichen Federarms mit einem Vorsprung (17) am freien Ende zur Fixierung des Gehäuses (14b, 14c, 14d) in der Führung (16b, 16c) aufweist.

2. Meßeinrichtung nach Anspruch 1, dadurch gekennzeichnet, daß das Auswahlelement (9b, 9d) aus einem magnetischen, einem induktiven oder einem kapazitiven Element besteht.

3. Meßeinrichtung nach Anspruch 2, dadurch gekennzeichnet, daß das Auswahlelement (9d) aus zwei auf einer magnetischen Platte (27) gegenpolig angeordneten Magneten (28) besteht.

4. Meßeinrichtung nach den Ansprüchen 1 und 2, dadurch gekennzeichnet, daß die Austrittsfläche der magnetischen Feldlinien des Magneten (9b) aus einer Außenfläche (26) des Gehäuses (14b) innerhalb dieser Außenfläche (26) liegt.

5. Meßeinrichtung nach Anspruch 1, bei der ein Träger für den Maßstab (1c) als ein Hohlprofil (20) zur Aufnahme des Maßstabs (1c) ausgebildet ist, dadurch gekennzeichnet, daß die Führung (16c) auf einer Außen- oder Innenseite des Hohlprofils (20) angeordnet ist.

6. Meßeinrichtung nach Anspruch 1, dadurch gekennzeichnet, daß die Führung (16b) in einer Fläche (19) Ausnehmungen (18) zur Aufnahme des Vorsprungs (17) des Klemmelements (15b) des Gehäuses (14b) aufweist.

7. Meßeinrichtung nach Anspruch 1, dadurch gekennzeichnet, daß das Gehäuse (14b, 14c, 14d) und das Klemmelement (15b, 15c, 15d) aus einem unmagnetischen Material, insbesondere aus Kunststoff, bestehen.

8. Meßeinrichtung nach Anspruch 1, dadurch gekennzeichnet, daß das Gehäuse (14b, 14c, 14d) aus einem durchsichtigen Material zur Aufnahme eines optischen Auswahlelements, insbesondere eines Spiegels, eines Prismas oder einer Lichtquelle, ausgebildet ist.

9. Meßeinrichtung nach Anspruch 1, dadurch gekennzeichnet, daß das Gehäuse (14b, 14c, 14d) und das Klemmelement (15b, 15c, 15d) aus einem Stück bestehen.

## Revendications

1. Appareil de mesure incrémentiel, avec des marques de référence (4a, 4b) prévues le long de la division (3a, 3b) d'une règle graduée (1a, 1b, 1c), qui sont associées de manière absolue à la division (3a, 3b) et sur lesquelles des impulsions électriques reproductibles (S$_B$) sont produites, en coopération avec une unité d'exploration (2, 2c), avec au moins un élément de sélection (9a, 9b, 9d), qui est disposé sur la règle graduée (1a, 1b, 1c) elle-même ou à sa proximité immédiate, dans un guidage (16a, 16b, 16c), et est déplaçable dans le sens de déplacement de l'unité d'exploration (2, 2c), et qui peut chaque fois être associé à une marque de référence (4a, 4b) sélectionnée, et avec un moyen de contact électrique (10) qui est commandable au moyen de l'élément de sélection (9a, 9b, 9d), une impulsion électrique (S$_B$) produite sur une marque de référence (4a, 4b) n'étant transmise ensuite à un compteur électronique (7) du dispositif de mesure et/ou à un dispositif de commande que si, simultanément, le moyen de contact électrique (10) est commandé par un élément de sélection (9a, 9b, 9d), caractérisé en ce que l'élément de sélection (9b, 9d) est logé dans un boîtier (14b, 14c, 14d), qui présente au moins un élément de blocage (15b, 15c, 15d) ayant la forme d'un bras élastique latéral avec une saillie (17) à l'extrémité libre, en vue de la fixation du boîtier (14b, 14c, 14d) dans le guidage (16b, 16c).

2. Appareil de mesure selon la revendication 1, caractérisé en ce que l'élément de sélection (9b, 9d) se compose d'un élément magnétique, d'un élément inductif, ou d'un élément capacitif.

3. Appareil de mesure selon la revendication 2, caractérisé en ce que l'élément de sélection (9d) se compose de deux aimants (28) disposés en antipôle sur une plaque magnétique (27).

4. Appareil de mesure selon les revendications 1 et 2, caractérisé en ce que la surface de sortie des lignes de champ magnétiques de l'aimant (9b) hors d'une surface extérieure (26) du boîtier (14b) est située à l'intérieur de cette surface extérieure (26).

5. Appareil de mesure selon la revendication 1, dans lequel un support destiné à la règle graduée (1c) est réalisé sous la forme d'un profilé creux (20) destiné à recevoir la règle graduée (1c), caractérisé en ce que le guidage (16c) est disposé sur une face extérieure ou intérieure du profilé creux (20).

6. Appareil de mesure selon la revendication 1, caractérisé en ce que le guidage (16b) présente dans une surface (19) des évidements (18) destinés à recevoir la saillie (17) de l'élément de blocage (15b) du boîtier (14b).

7. Appareil de mesure selon la revendication 1, caractérisé en ce que le boîtier (14b, 14c, 14d) et l'élément de blocage (15b, 15c, 15d) sont composés d'un matériau amagnétique, en particulier de matière plastique.

8. Appareil de mesure selon la revendication 1, caractérisé en ce que le boîtier (14b, 14c, 14d) est composé d'un matériau transparent pour recevoir un élément de sélection optique, en particulier un miroir, um prisme ou une source lumineuse.

9. Appareil de mesure selon la revendication 1, caractérisé en ce que le boîtier (14b, 14c, 14d) et l'élément de blocage (15b, 15c, 15d) se composent d'une seule pièce.

## Claims

1. Incremental measuring device with reference marks (4a, 4b) provided along the graduation (3a, 3b) of a measuring scale (1a, 1b, 1c), which marks are associated absolutely with the graduation (3a, 3b) and at which reproducible electrical pulses (S$_B$) are produced in conjunction with a sensing unit (2, 2c), with at least one selector element (9a, 9b, 9d) which is arranged slidably in a guide (16a, 16b, 16c) on the measuring scale itself (1a, 1b, 1c) or in the immediate neighbourhood thereof, in the direction of movement of the sensing unit (2, 2c), and which can be associated with a selected reference mark (4a, 4b) and with an electrical circuit means (10) which can be controlled by the selector element (9a, 9b, 9d), whereby an electrical pulse ($S_B$) generated at a reference mark (4a, 4b) is only then fed to an electronic counter (7) of the measuring device and/or a control device when the electrical circuit means (10) is simultaneously actuated by a selector element (9a, 9b, 9d), characterized in that the selector element (9b, 9d) is fitted in a housing (14b, 14c, 14d) which comprises at least one clamp element (15b, 15c, 15d) in the form of a lateral spring arm with a projection (17) at the free end for fixing the housing (14b, 14c, 14d) in the guide (16b, 16c).

2. Measuring device according to claim 1, characterized in that the selector element (9b, 9d) consists of a magnetic, inductive or capacitive element.

3. Measuring device according to claim 2, characterized in that the selector element (9d) consists of two oppositely poled magnets (28) on a magnetic plate (27).

4. Measuring device according to claims 1 and 2, characterized in that the exit surface of the magnetic field lines of the magnet (9b) out of an outer surface (26) of the housing (14b) lies within this outer surface (26).

5. Measuring device according to claim 1, in which a carrier for the measuring scale (1c) is formed as a hollow profile (20) for receiving the measuring scale (1c), characterized in that the guide (16c) is arranged on an outer or an inner side of the hollow profile (20).

6. Measuring device according to claim 1, characterized in that the guide (16b) comprises recesses (18) in a surface (19) for reception of the projection (17) of the clamp element (15b) of the housing (14b).

7. Measuring device according to claim 1, characterized in that the housing (14b, 14c, 14d) and the clamp element (15b, 15c, 15d) are made from a non-magnetic material, especially from plastics material.

8. Measuring device according to claim 1, characterized in that the housing (14b, 14c, 14d) is formed from a transparent material for receiving an optical selector element, especially a mirror, a prism or a light source.

9. Measuring device according to claim 1, characterized in that the housing (14b, 14c, 14d) and the clamp element (15b, 15c, 15d) consist of one piece.

FIG. 1    STAND DER TECHNIK

FIG. 2    STAND DER TECHNIK

1

FIG. 3

FIG.4

FIG. 5a

FIG. 5b

FIG. 6a

FIG. 6b